# EUROPEAN PATENT APPLICATION

(11) **EP 3 875 509 A1**
(43) Date of publication of application: **08.09.2021**
(21) Application number: 20160305.7
(22) Date of filing: 02.03.2020
(51) Int. Cl.: C08G 18/32, C08G 18/48, C08G 18/66, C08G 18/72, C08G 18/75, C08G 18/79

(54) **FLEXIBLE FOAM**

(71) Applicant: Covestro Deutschland AG, 51373 Leverkusen (DE)
(72) Inventor: The designation of the inventor has not yet been filed
(74) Representative: Davepon, Björn

(57) **Abstract**

The invention relates to a composition for preparing a flexible foam and its application. The composition comprises the following components: a. an isocyanate mixture; b. a polymer polyol mixture; c. an isocyanate-reactive group-containing compound having a number average molecular weight of 32-400 g/mol; d. an aqueous alkali metal salt solution, having a concentration of greater than or equal to 1.5% and less than 30%, and a pH value of less than 9.5; and e. a metal catalyst; wherein the amount of the tertiary amine catalyst in the composition is not more than 0.1wt%, and the isocyanate index of the composition is 70-120. The composition has a high reaction efficiency and can meet the quantitative production requirements of the textile industry. The flexible foam prepared from the composition has a good phenolic yellowing resistance, and can meet the comprehensive requirements of the textile industry for a high rebound resilience, a good gas permeability, a ultraviolet yellowing resistance and the like of the foam.

## Description

### Technical Field

The invention relates to a composition for preparing a flexible foam and its application, a flexible foam prepared from the composition and a method for preparing the flexible foam, and a textile containing the flexible foam.

### Background Technology

The yellowing phenomenon has always been a problem in the textile industry, which seriously affects the appearance. Textile yellowing mainly includes phenolic yellowing, thermal yellowing, anti-NOₓ yellowing, ultraviolet yellowing, and the like. Among them, phenolic yellowing is a yellowing phenomenon that often occurs in textiles during dyeing and finishing processes or during transportation and storage. It is mainly manifested in the phenomenon of yellowing on the outermost layers of textiles close to packaging materials and packaging rolls. This is because 2,6-di-tert-butyl-p-hydroxytoluene (BHT), an antioxidant, is commonly added to plastic packaging materials. BHT easily reacts with oxynitrides in the air to form 2,6-di-tert-butyl-p-nitrophenol (DTNP), which substance is easily sublimated and transferred to textiles at room temperature, and generally develops yellow under an alkaline environment, causing textiles to turn yellow. At the earliest, the textile phenolic yellowing test was an internal test method of Courtaulds, Mark & Spencer and other companies, and subsequently adopted by major international testing agencies and companies. Based on this, the international standard ISO 105-X18 was gradually formed to test the phenolic yellowing resistance index of the textile. This test has been widely used by textile practitioners for the textile material testing and has become an important testing item for the cargo examination in the trade.

Flexible foam, especially flexible polyurethane foam, is often used in textile and other fields. For example, the flexible polyurethane foam is often used as a garment pad after laminating with textiles or used as a shoulder pad, a collar, an underwear cup or the like formed after thermoforming. The flexible polyurethane foams produced according to the prior art are mostly based on aromatic isocyanates such as toluene diisocyanate (TDI) or diphenylmethane diisocyanate (MDI) because of their high reactivity; however, aromatic isocyanates can lead to the easy oxidation of flexible polyurethane foams upon exposure to illumination or air to turn yellow.

This kind of yellowing nature can be improved by using aliphatic isocyanates in flexible polyurethane foams. However, because the activity of aliphatic isocyanates is much lower than that of aromatic isocyanates, it is currently rarely used in the industrial production of flexible polyurethane foams. In order to solve the problem of the low activity of aliphatic isocyanates, a catalyst, a highly active isocyanate composition, a highly active polyol composition are usually used, or a small number of synthesis methods are developed in other production processes to prepare flexible aliphatic polyurethane foams.

With respect to the method of using a strong catalyst, for example, US 5147897 discloses a method for preparing a non-yellowing polyurethane foam by using an aliphatic isocyanate prepolymer, wherein the aliphatic isocyanate prepolymer reacts with water in an amount of 0.4 to 5 times the aliphatic isocyanate prepolymer equivalent in the presence of a potassium or sodium salt of a C₂-C₁₀ alkanoic acid or a diazabicyclic olefin catalyst, wherein the aliphatic isocyanate prepolymer is obtained by the addition polymerization of a polyol having an average molecular weight of 100g/mol-5,000g/mol and an aliphatic isocyanate in an amount of 2.6-14 times the hydroxyl equivalent. This method cannot be used to prepare flexible polyurethane foams with a density of less than 80 kg/m3, nor can it be used to prepare molded foams. The polyurethane foam produced by this method is prone to closed cells. EP1721720A1 has specifically studied the post-treatment of non-yellowing polyurethane foams to improve the gas permeability of the foams.

At present, a few systems using alkali metal catalysts as foaming catalysts have appeared in the reports, but the systems often use high-concentration, high-basicity alkali metal solutions, such as sodium carbonate. High basicity accelerates the reaction between BHT and oxynitrides, promotes the adsorption and color development of DTNP on the foam, making it difficult for the flexible polyurethane foam to pass the phenolic yellowing resistance test.

In order to make the flexible polyurethane foam pass the phenolic yellowing resistance test, the current common method in the industry is to add acidic substances in the formula, but this will significantly affect the chemical reaction of the flexible polyurethane foam, especially the foaming rate of the aliphatic polyurethane foam, making it difficult to apply said method to the actual quantitative production, and it will also change the original physical property of the foam: under no serious circumstances, the process tolerance is reduced and the quality variability is increased, and in severe cases, a severe acid-base exothermic reaction will occur, causing safety problems.

Another method is to soak the flexible polyurethane foam in an acidic solution or a solution containing a phenolic yellowing-resistant reagent, and then dry the foam to suppress the phenolic yellowing. For example, CN10476700 discloses a method for preparing a phenolic yellowing resistant foam cotton, which adopts a process of impregnating in an acid-containing buffer solution to improve the phenolic yellowing resistance of the foam cotton. The buffer solution is an aqueous solution of a metal chelating agent and a carboxylic acid compound in an amount of 20-60wt% of the metal chelating agent, and has a pH value of 3-7. The impregnation temperature is 25-40°C, and the impregnation time is 5-15 minutes. CN102558594 discloses a similar method for physically modifying the polyurethane foam cotton. The organic acid buffer solution is obtained by mixing a metal chelating agent, an organic acid and a salt thereof, and water, and has a pH value of 3-7, wherein the weight ratio of the added metal chelating agent is 5w/w% or less, and the weight percentage of the added organic acid and a salt thereof is 0.3-10w/w%. The soaking method has the following disadvantages: the post-treatment process is complex; the foam has a worse phenolic yellowing resistance after water-washing; the heat resistance of the foam is affected; and the acidic substances on the surface of the foam have an adverse effect on the skin.

With respect to the method of using a highly active isocyanate composition, for example, US 20060160977 discloses a process for preparing a non-yellowing, gas-permeable aliphatic polyurethane foam, which is prepared from an isocyanate and an polyether polyol having a functionality of 2.7-6.0 and a hydroxyl value of 150-300 in an amount of 50-80wt%, wherein the isocyanate includes aliphatic and/or alicyclic isocyanate monomers having at least two NCO groups directly attached to aliphatic carbon atoms, such as a combination of IPDI and HDI or a combination of H₁₂MDI and HDI. The polyurethane foam prepared by this method has the problem of VOC volatilization. JP 2006-257187A discloses a method for preparing a flexible polyurethane foam with hardly yellowing, in which a polyethylene oxide-polypropylene oxide copolymer polyol is reacted with a polyisocyanate component. The polyisocyanate component includes isophorone diisocyanate (IPDI) and/or isophorone diisocyanate trimer or a derivative thereof, hexamethylene diisocyanate (HDI) trimer and/or hexamethylene diisocyanate derivatives, the weight ratio of both is 7:3-3:7. The flexible polyurethane foam has good durability in addition to good UV and NOx yellowing resistance. The disadvantages of this polyurethane foam are relatively hard, the reduced elongation and tensile strength/tearing toughness, which affect its use. And because the content of the isocyanate groups in the trimer and the derivatives in the reactant is reduced, more isocyanate components need to be added in the preparation process to obtain a suitable isocyanate index, thereby increasing the cost of foam preparation.

With respect to the method of using a highly active polyol component, for example, CN101157747A discloses a method for preparing a polyurethane foam by reacting a polyethylene oxide-polypropylene oxide copolymer having an ethylene oxide content of 8-25wt% and an isocyanate. A traditional tin catalyst such as dibutyltin dilaurate and stannous octoate, and a tertiary amine catalyst such as triethylenediamine and bis(2-dimethylaminoethyl)ether are used in its catalyst system. JP 2003-012756A discloses a method for preparing a polyurethane foam with hardly yellowing by reacting an alicyclic diisocyanate and an amine-terminated polypropylene oxide copolymer polyol. The application also discloses an amine-terminated polypropylene oxide copolymer polyol, which is an expensive raw material, limited in supply, and difficult to obtain in the practical applications.

However, the flexible polyurethane foam prepared by the above method still has the disadvantage that the foam is easy to absorb water to soften, swell and deform during the washing process, and it will be limited in applications such as textiles. Therefore, it has been tried in the industry to develop flexible polyurethane foams with low density, excellent weather resistance and excellent water-washing deformation resistance.

CN101580575A discloses a flexible polyurethane foam, which is prepared by reacting an aliphatic isocyanate and/or an alicyclic isocyanate and/or an aromatic isocyanate in which an isocyanate group is not directly connected to an aromatic ring, an isocyanate active mixture containing a polyoxyalkylene glycol compound, a foaming agent and a catalyst. The produced foam has excellent weather resistance and water-washing deformation resistance. The selected catalyst system is an alkali metal salt, a diazabicyclic olefin and a phenyl salt thereof, and a dibutyltin dilaurate catalyst.

JP 2001-72738A discloses a polyurethane foam which is prepared by reacting an aliphatic diisocyanate and a polyol having an ethylene oxide content of less than 18 parts by weight (based on the amount of polyol being 100 parts by weight) in the presence of a diazabicyclic olefin and a phenyl salt thereof and an alkali metal salt of a weak acid. The polyurethane foam is not prone to yellowing and has good weather resistance and water-washing deformation resistance. The disadvantage of said polyurethane foam lies in that it is easy to collapse, and the operation range between the cell closure and the shrinkage of the foam is extremely narrow, which leads to the production difficulty. In addition, the catalyst DBU used in the preparation of the polyurethane foam has a low boiling point and escapes easily from the foam, so that the foam has a large amount of VOC emissions.

CN 101412798 discloses a method for preparing a polyurethane foam, which is prepared by using two different isocyanate actives and an isocyanate free of an isocyanate group directly connected to an aromatic ring, wherein the first isocyanate active has a hydroxyl functionality of at least 2.6, a hydroxyl equivalent of less than 800 and a hydroxyl value of more than 70 mg KOH/g; the second isocyanate active has a hydroxyl functionality of less than 6, a hydroxyl equivalent of 600-6000, a hydroxyl value of 9-94 mg KOH/g and a primary hydroxyl content of at least 30wt%; the weight ratio of the first and second isocyanate actives is (20-90):(80-10). The selected catalyst system is an alkali metal salt and dibutyltin dilaurate catalyst. The polyurethane foam obtained by this method has poor hand feeling.

In summary, it is hoped in the industry to obtain a flexible aliphatic polyurethane foam with good phenolic yellowing resistance, and it can also meet the requirements for flexible foams in the textile industry such as high rebound resilience, good gas permeability, ultraviolet yellowing resistance, suitability for quantitative production and the like.

### Summary of the invention

The object of the present invention is to provide a composition for preparing a flexible foam and its application, a flexible foam prepared from the composition and a method for preparing the flexible foam, and a textile containing the flexible foam.

A composition according to the invention, comprising the following components:
a. an isocyanate mixture, comprising an isocyanate monomer and an isocyanate trimer, the weight ratio of the isocyanate monomer to the isocyanate trimer is 3:1-200:1;
b. a polymer polyol mixture, comprising:
   b1) a first polyether polyol having a number average molecular weight of not less than 3000 g/mol, said first polyether polyol being obtained by polymerization of components comprising ethylene oxide, said first polyether polyol has an ethylene oxide content of 5-20wt%, based on the amount of the components for preparing said first polyether polyol being 100wt%,
   b2) a second polyether polyol having a number average molecular weight of not less than 3000 g/mol, said second polyether polyol being obtained by polymerization of components comprising ethylene oxide, said second polyether polyol has an ethylene oxide content of greater than 60wt%, based on the amount of the components for preparing said second polyether polyol being 100wt%, and
   b3) optionally a third polyether polyol having a number average molecular weight of not less than 500 g/mol,
   wherein, the weight ratio of the first polyether polyol to the second polyether polyol is 4:1-100:1, and the amount of the third polyether polyol is not more than 20wt%, based on the amount of the polymer polyol mixture being 100wt%;
c. an isocyanate-reactive group-containing compound having a number average molecular weight of 32-400 g/mol;
d. an aqueous alkali metal salt solution, having a concentration of greater than or equal to 1.5% and less than 30%, and a pH value of less than 9.5; and
e. a metal catalyst;
wherein the amount of the tertiary amine catalyst in the composition is not more than 0.1wt%, and the isocyanate index of the composition is 70-120.

According to one aspect of the present invention, there is provided a flexible foam obtained by reacting a composition provided according to the present invention.

According to yet another aspect of the present invention, there is provided the use of the composition provided by the present invention for preparing the flexible foam.

According to yet another aspect of the present invention, there is provided a method for preparing the flexible foam, comprising mixing the components of the composition provided according to the present invention and foaming to obtain the flexible foam.

According to still another aspect of the present invention, there is provided a textile containing the flexible foam provided by the present invention.

The composition for preparing flexible foam of the present invention has high reaction efficiency and can meet the quantitative production requirements of the textile industry. The flexible polyurethane foam prepared from the composition of the present invention has good phenolic yellowing resistance, and can meet the comprehensive requirements of the textile industry for high rebound resilience, good gas permeability, ultraviolet yellowing resistance and the like of the foam. The composition of the present invention also has the advantages of washing resistance, good tensile strength, high ductility, adjustable hardness and hand feel and the like.

### Detailed Description of the Invention

The present invention provides a composition comprising the following components:
a. an isocyanate mixture, comprising an isocyanate monomer and an isocyanate trimer, the weight ratio of the isocyanate monomer to the isocyanate trimer is 3:1-200:1;
b. a polymer polyol mixture, comprising:
   b1) a first polyether polyol having a number average molecular weight of not less than 3000 g/mol, said first polyether polyol being obtained by polymerization of components comprising ethylene oxide, said first polyether polyol has an ethylene oxide content of 5-20wt%, based on the amount of the components for preparing said first polyether polyol being 100wt%,
   b2) a second polyether polyol having a number average molecular weight of not less than 3000 g/mol, said second polyether polyol being obtained by polymerization of components comprising ethylene oxide, said second polyether polyol has an ethylene oxide content of greater than 60wt%, based on the amount of the components for preparing said second polyether polyol being 100wt%, and
   b3) optionally a third polyether polyol having a number average molecular weight of not less than 500 g/mol,
   wherein, the weight ratio of the first polyether polyol to the second polyether polyol is 4:1-100:1, and the amount of the third polyether polyol is not more than 20wt%, based on the amount of the polymer polyol mixture being 100wt%;
c. an isocyanate-reactive group-containing compound having a number average molecular weight of 32-400 g/mol;
d. an aqueous alkali metal salt solution, having a concentration of greater than or equal to 1.5% and less than 30%, and a pH value of less than 9.5; and
e. a metal catalyst;
   wherein the amount of the tertiary amine catalyst in the composition is not more than 0.1wt%, and the isocyanate index of the composition is 70-120. The present invention also provides an application of the composition, a flexible foam prepared from the composition, a process for preparing the flexible foam, and a textile containing the flexible foam.

### Composition

The isocyanate index of the composition is preferably 100-120, and most preferably 100-110.

The amount of the tertiary amine catalyst of the composition is not more than 0.1wt%, based on the amount of the composition being 100wt%.

The amount of the tertiary amine catalyst of the composition is most preferably not more than 0.01wt%, based on the amount of the composition being 100wt%.

The tertiary amine catalyst can be one or more of the following: Dabco BL-11 (bis(2-dimethylaminoethyl)ether dissolved in dipropylene glycol), Dabco 33LV (triethylene diamine dissolved in propylene glycol), and DBU (diazabicyclic olefin).

The amount of the isocyanate mixture and the polymer polyol mixture is preferably greater than 50wt% and less than or equal to 98wt%, most preferably greater than 85wt% and less than or equal to 98wt%, based on the amount of the composition being 100wt%.

### a) isocyanate mixture

The isocyanate group content of the isocyanate mixture is preferably 20-54wt%, based on the amount of the isocyanate mixture being 100wt%.

The isocyanate group content of the isocyanate mixture is most preferably 20-37.5wt%, based on the amount of the isocyanate mixture being 100wt%.

The weight ratio of the isocyanate monomer to the isocyanate trimer is 3:1-120:1, more preferably 3:1-20:1, most preferably 5:1-10:1.

The isocyanate monomer and the isocyanate trimer are each independently preferably aliphatic and/or alicyclic.

### Isocyanate monomer

The isocyanate functionality of the isocyanate monomer is preferably 2.

The isocyanate group content of the isocyanate monomer is preferably 20-40wt%, based on the amount of the isocyanate monomer being 100wt%.

The isocyanate monomer is preferably one or more of the following: an aliphatic isocyanate monomer and an alicyclic isocyanate monomer.

The aliphatic isocyanate monomer is preferably one or more of the following: hexamethylene diisocyanate (HDI), 2,2-dimethyl-pentamethylene diisocyanate, 2,2,4-trimethyl hexamethylene diisocyanate, butylene diisocyanate, 1,3-butadiene-1,4-diisocyanate, 2,4,4-trimethyl-1,6-hexamethylene diisocyanate and methyl 2,6-diisocyanatohexanoate.

The alicyclic isocyanate monomer is preferably one or more of the following: isophorone diisocyanate (IPDI), isomeric bis(4,4'-isocyanato-cyclohexyl) methane or a mixture thereof having any isomer content, 1,4-cyclohexylene diisocyanate, 1,3-bis(isocyanatomethyl)benzene (XDI), 1,3- and/or 1,4-bis(2-isocyanato-prop-2-yl)-benzene (TMXDI), norbornane diisocyanate (NBDI), hydrogenated xylylene diisocyanate (H₆XDI), 1,4-cyclohexyl diisocyanate (H₆PPDI), 1,5-pentamethylene diisocyanate (PDI) and dicyclohexylmethane diisocyanate (H₁₂MDI).

The isocyanate monomer is preferably an alicyclic isocyanate monomer, further preferably one or more of the following: isophorone diisocyanate and dicyclohexylmethane diisocyanate, and most preferably isophorone diisocyanate.

### Isocyanate trimer

The isocyanate trimer has a viscosity of preferably 1000-10000mPa·s, most preferably 1000-3000 mPa·S, measured at 23°C.

The isocyanate group content of the isocyanate trimer is preferably 20-25wt%, based on the amount of the isocyanate trimer being 100wt%.

The isocyanate trimer is preferably one or more of the following: aliphatic isocyanate trimer and alicyclic isocyanate trimer, and most preferably one or more of the following: isophorone diisocyanate trimer, 1,5-cyclopentane diisocyanate trimer and hexamethylene diisocyanate trimer.

### b) polymer polyol mixture

The hydroxyl group functionality of the polymer polyol mixture is preferably 2-4, most preferably 3-4.

The weight ratio of the first polyether polyol and the second polyether polyol is preferably 4:1-30:1, most preferably 16:1-20:1.

### b1) first polyether polyol

The number average molecular weight of the first polyether polyol is preferably 4000-6000 g/mol.

The hydroxyl value of the first polyether polyol is preferably 20-80 mg KOH/g, most preferably 25-40 mg KOH/g.

The ethylene oxide content of the first polyether polyol is preferably 10-20wt%, based on the amount of the component for preparing the first polyether polyol being 100wt%.

The viscosity of the first polyether polyol is preferably 750-1500 mPa·s.

The hydroxyl group functionality of the first polyether polyol is preferably 2-4.

The first polyether polyol is preferably one or more of the following: Arcol Polyol 3553, Acrol Polyol 1362, and Acrol polyol 1026.

### b2) second polyether polyol

The number average molecular weight of the second polyether polyol is preferably 3000-6000 g/mol, most preferably 4000-5000 g/mol.

The hydroxyl value of the second polyether polyol is preferably 20-80 mg KOH/g, most preferably 25-40 mg KOH/g.

The ethylene oxide content of the second polyether polyol is preferably greater than 65wt%, most preferably greater than 65wt% and less than 80wt%, based on the amount of the components for preparing said second polyether polyol being 100wt%.

The viscosity of the second polyether polyol is preferably 1000-1500 mPa·s.

The hydroxyl group functionality of the second polyether polyol is preferably 2-4, most preferably 3.

The second polyether polyol is preferably Bayflex VP PU 191F03.

### b3) optional third polyether polyol

The third polyether polyol is different from the first polyether polyol and the second polyether polyol.

The number average molecular weight of the third polyether polyol is preferably 500-1000 g/mol.

The hydroxyl value of the third polyether polyol is preferably greater than 200 mg KOH/g, most preferably 200-250 mg KOH/g.

The viscosity of the third polyether polyol is preferably 200-500 mPa·s.

The hydroxyl group functionality of the third polyether polyol is preferably 2-4, most preferably 3.

The amount of the third polyether polyol is preferably not more than 10wt%, based on the amount of the polymer polyol mixture being 100wt%.

The third polyether polyol is preferably obtained by polymerization of components not comprising ethylene oxide.

The third polyether polyol is preferably Arcol Polyol 1071.

### c) isocyanate-reactive group-containing compound having a number average molecular weight of 32-400 g/mol

The isocyanate-reactive group herein refers to a group capable of reacting with an isocyanate group.

The isocyanate-reactive group-containing compound having a number average molecular weight of 32-400 g/mol is preferably an aliphatic compound and/or an alicyclic compound.

The isocyanate-reactive group is preferably one or more of the following: hydroxyl group, primary amino group and secondary amino group.

The isocyanate-reactive group-containing compound having a number average molecular weight of 32-400 g/mol further preferably contains at least two isocyanate-reactive groups.

The isocyanate-reactive group-containing compound having a number average molecular weight of 32-400 g/mol is most preferably one or more of the following: glycerol, 1,1,1-trimethylolethane, 1,1,1-trimethylolpropane, 1,2,3-trimethylolethane hexane, poly(propylene oxide-ethylene oxide), poly(propylene oxide), poly(ethylene oxide), monoethanolamine, diethanolamine, triethanolamine, 2-amino-2-methyl-1-propanol and hydrazine.

The amount of the isocyanate-reactive group-containing compound having a number average molecular weight of 32-400 g/mol is preferably 0.5-5.0wt%, most preferably 2-4wt%, based on the amount of the composition being 100wt%.

### d) aqueous alkali metal salt solution

The alkali metal salt in the aqueous alkali metal salt solution is preferably obtained by the reaction of a Bronsted acid and an alkali metal.

The alkali metal salt in the aqueous alkali metal salt solution is most preferably one or more of the following: sodium bicarbonate, potassium bicarbonate, ammonium bicarbonate, sodium sulfate, potassium sulfate, potassium citrate, sodium benzoate, sodium sulfite, potassium sulfite, potassium hydrogen sulfate and sodium hydrogen sulfate.

The concentration of the aqueous alkali metal salt solution is preferably 2%-25%.

The pH value of the aqueous alkali metal salt solution is preferably 6-9.2.

The amount of the aqueous alkali metal salt solution is preferably 0.5-5.0wt%, most preferably 1-3wt%, based on the amount of the composition being 100wt%.

### e) metal catalyst

The metal catalyst is preferably one or more of the following: tin compounds, stannous compounds, lead compounds, nickel compounds, cobalt compounds, copper compounds and bismuth compounds, most preferably one or more of the following: tin compounds and stannous compounds.

The tin compounds are preferably one or more of the following: tin acetate, tin octoate, tin oleate, tin laurate, dibutyltin diacetate, dimethyltin dilaurate, dibutyltin dilaurate, dibutyltin dithiolate, dibutyltin maleate, dibutyltin di-neodecanoate, dioctyltin dithiolate, dioctyltin dilaurate and dibutyltin dichloride; further preferably one or more of the following: dialkyltin carboxylate salts, trialkyltin hydroxides, dialkyltin oxides, dialkyltin dialkoxides, dialkyltin dichlorides and dialkyltin dithiols; most preferably dibutyltin dilaurate.

The stannous compounds are preferably stannous carboxylates, most preferably one or more of the following: stannous acetate, stannous octoate, and stannous oleate.

The lead compounds are preferably one or more of the following: lead octoate and lead naphthenate.

The nickel compounds are preferably nickel naphthenate.

The cobalt compounds are preferably cobalt naphthenate.

The copper compounds are preferably copper octenate.

The bismuth compounds are preferably one or more of the following: bismuth octoate and bismuth neodecanoate.

The amount of the metal catalyst is preferably 0.5-3.0wt%, most preferably 0.5-1.5wt%, based on the amount of the composition being 100wt%.

### F) additive

The composition preferably further comprises an additive, and the additive is preferably one or more of the following substances: water, physical foaming agents, surfactants, pigments, antioxidants, UV light absorbents, UV light stabilizers, flame retardants, fillers, recycled foam powders, antimicrobial compounds and antistatic agents.

The amount of the additive is preferably of 0.3-15wt%, based on the amount of the composition being 100wt%.

Water in the additive means water added in addition to water contained in the aqueous alkali metal salt solution. Water reacts with the isocyanate mixture to produce carbon dioxide, thereby obtaining flexible polyurethane foams in different density ranges. When the water content of the composition is relatively high, more carbon dioxide can be generated, and a flexible polyurethane foam of lower density can be obtained.

The amount of water is preferably 0.3-5.0wt%, most preferably 0.5-2.5wt%, based on the amount of the composition being 100wt%.

The physical foaming agent is preferably one or more of the following: hydrochloroflurocarbons and carbon dioxide, most preferably carbon dioxide (gas or liquid).

The surfactant is preferably one or more of the following: a polysiloxane-polyalkylene oxide copolymer, a silicon-free non-ionic surfactant, a cationic surfactant, an anionic surfactant, and a high molecular type surfactant having a relative molecular weight of greater than 1,000g/mol.

The polysiloxane-polyalkylene oxide copolymer is preferably a polysiloxane-polyalkylene oxide copolymer having a hydrophilic-lipophilic balance (HLB) between 3 and 33, most preferably a polysiloxane-polyalkylene oxide copolymer having an HLB between 6 and 20.

The silicon-free non-ionic surfactant is preferably a silicon-free non-ionic surfactant having an HLB between 1 and 20, most preferably a silicon-free non-ionic surfactant having an HLB between 6 and 20.

The surfactant is most preferably Niax silicone Y-10366.

The amount of the surfactant is preferably 1-4wt%, based on the amount of the composition being 100wt%.

Although the flexible polyurethane foam of the present invention is not easily discolored by ultraviolet (UV) radiation, in order to improve the light stability of the foam, a UV light stabilizer, a UV light absorber or an antioxidant may be added to the composition.

The UV light stabilizer is preferably a hindered amine UV light stabilizer.

The hindered amine UV light stabilizer is preferably one or more of the following: bis(2,2,6,6-tetramethylpiperidinyl) sebacate, poly[[6-[(1,1,3,3-tetramethylbutyl)amino]-s-triazine-2,4-diyl]-[(2,2,6,6-tetramethyl-4-piperidinyl)imino]-hexamethylene-[(2,2,6,6-tetramethyl-4-piperidinyl)imino]] (Chemical Abstract No. 71878-19-8), bis(1,2,2,6,6-pentamethyl-4-piperidinyl)-[[3,5-bis(1,1-dimethylethyl)-4-hydroxyphenyl]methyl]butyl malonate and 4-benzoyloxy-2,2,6,6-tetramethylpyridine.

The UV light absorbent is preferably one or more of the following: salicylates, benzotriazoles and benzophenones.

The salicylates are preferably phenyl salicylate and/or t-butylphenyl salicylate.

The benzotriazoles are preferably one or more of the following: 2-(2'-hydroxy-3',5'-diisopentylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole and 2-(2'-hydroxy-3',5'-di-tert-butylphenyl)benzotriazole.

The benzophenones are preferably one or more of the following: 2,2'-dihydroxy-4,4'-dimethoxybenzophenone, 2-hydroxy-4-n-octyloxybenzophenone, 2,2'-dihydroxy-4-methoxybenzophenone and 2-hydroxy-4-methoxybenzophenone.

The antioxidant is preferably one or more of the following: a free radical chain blocking agent and a peroxide decomposer.

The peroxide decomposer is preferably one or more of the following: thioesters and phosphites.

The amounts of the antioxidant and the UV light absorbent are each independently preferably 0.1wt%-2wt%, based on the amount of the composition being 100wt%.

### Flexible foam

The flexible foam has a density of 20kg/m³-120kg/m³, most preferably 20kg/m³-100kg/m³.

The flexible foam has an air flow rate of preferably not less than 30 L/min, a falling ball rebound of preferably greater than 35%, and a UV stability of preferably not less than 4.

The flexible foam has a phenolic yellowing resistance index of preferably not less than 3, which is obtained by the test in accordance with the standard ISO 105-X18:2007.

The flexible foam has a phenolic yellowing resistance index, after washing and drying once according to the standard AATCC 135-2012, of preferably not less than 3, which is obtained by the test in accordance with the standard ISO 105-X18:2007.

### Process for preparing flexible foam

The mixing of the components may be the simultaneous mixing of the components.

The mixing of the components can also be performed in steps, for example, by first mixing the components except the component a) and the component d) in the composition, then adding the component d), and finally adding the component a).

The process has a cream time of preferably less than 50 seconds, and a rise time of preferably not more than 500 seconds.

The cream time refers to a required time period starting from mixing the isocyanate mixture and other components in the composition, until the resulting mixture obtained by mixing becomes white and milky.

The rise time refers to a required time period starting from mixing the isocyanate mixture and other components in the composition until the foaming ends.

The component b) may be a pre-mixed one, or each of polyether polyols may be added one by one, preferably the pre-mixed one.

The component a) may be a pre-mixed one, or each of isocyanates may be added one by one, preferably the pre-mixed one.

### Textile

The textile is preferably selected from the group consisting of pillows, cushions, garment pads, underwear and upper vamps.

### Examples

Unless limited otherwise, all technical and scientific terms used herein have the same meanings as those commonly understood by those skilled in the art to which this invention belongs. When the definitions of the terms in the description are inconsistent with the meanings commonly understood by those skilled in the art to which this invention belongs, the definitions described herein shall prevail.

Unless otherwise stated, all numerical values used in the description and claims that express the amount of the ingredient, the reaction condition and the like are understood to be modified by the term "about". Therefore, unless indicated to the contrary, the numerical parameters set forth herein are approximations that can be varied according to the desired performance obtained as required.

As used herein, "and/or" means one or all of the mentioned elements.

As used herein, "comprising" and "containing" encompass a situation where only the mentioned elements are present, and a situation where other elements not mentioned are present besides the mentioned elements.

All percentages in the present invention are weight percentages, unless otherwise stated.

The analytical measurements of the present invention are all performed at 23°C, unless otherwise stated.

The number average molecular weight is determined at 23°C by the gel permeation chromatography with tetrahydrofuran as the mobile phase and polystyrene as the control standard.

The hydroxyl value is determined according to ASTM D4274.

The isocyanate group (NCO) content is determined by volume according to DIN-EN ISO 11909; and the measured data include free and potentially free NCO contents.

The viscosity is measured at 23°C according to DIN 53019 using a DV-II + Pro. rotational viscometer from Brookfield Company.

The pH value of the aqueous alkali metal salt solution is measured at 23°C according to DIN 19263 using a PB-10 pH meter from Sartorius Company.

Isocyanate index=(the total mole number of NCO groups in the composition /the total mole number of NCO reactive groups in the composition)^{∗}100.

The ethylene oxide content of the polyether polyol refers to the weight percentage content of the ethylene oxide component in the preparation of the polyether polyol to the total components in the preparation of the polyether polyol.

The isocyanate group content of the isocyanate mixture is calculated as: ∑(the weight of each isocyanate components * the content of the corresponding isocyanate group (NCO%))/the sum of the weights of isocyanate components. The isocyanate group content of the isocyanate mixture can also be determined by volume according to DIN-EN ISO 11909; and the measured data include free and potentially free NCO contents.

### Raw materials and reagents

Desmodur®I: isophorone diisocyanate (IPDI), having an isocyanate group (NCO) content of 37.5±0.5%, a viscosity of 10 mPa·s and an NCO functionality of 2, and commercially available from Covestro Polymers (China) Co., Ltd.

Desmodur XP2838: isophorone diisocyanate trimer, having an NCO content of 21±0.5%, an HDI monomer content of <0.2%, an IPDI monomer content of <0.15%, and a viscosity (23°C) of 2700 mPa·s, and commercially available from Covestro Polymers (China) Co., Ltd.

Desomodur N3600: hexamethylene diisocyanate trimer, having an NCO content of 23±0.5%, an HDI monomer content of <0.25%, and a viscosity of 1100 mPa•s, and commercially available from Covestro Polymers (China) Co., Ltd.

Desomodur N3300: hexamethylene diisocyanate trimer, having an NCO content of 21.8±0.3%, an HDI monomer content of <0.15%, and a viscosity of 2500 mPa·s, and commercially available from Covestro Polymers (China) Co., Ltd.

Arcol Polyol 3553: polyether triol, having a hydroxyl value of about 35 mg KOH/g, a number-average molecular weight of 4800 g/mol, a viscosity of 1000 mPa·s, a hydroxy functionality of 3, and an EO content of 14 wt%, and commercially available from Covestro Polymers (China) Co., Ltd.

Arcol Polyol 1362: polyether triol, having a hydroxyl value of about 28 mg KOH/g, a number-average molecular weight of 6000 g/mol, a viscosity of 1200± 200 mPa·s, a hydroxy functionality of 3, and an EO content of 15 wt%, and commercially available from Covestro Polymers (China) Co., Ltd.

Bayflex VP PU 19IF03: high activity polyether polyol, having a hydroxyl value of about 37 mg KOH/g , a number-average molecular weight of 4550 g/mol , a viscosity of about 1070 mPa·s, a hydroxy functionality of 3, and an EO content of 71 wt% , and commercially available from Covestro Polymers (China) Co., Ltd.

TEOA: triethanolamine, having a purity of ≥99.0%, commercially available from Sinopharm Chemical Reagent Co., Ltd, and used as the isocyanate-reactive group-containing compound having a number average molecular weight of 32-400 g/mol.

DEOA: diethanolamine, having a purity of ≥99.0%, commercially available from Sinopharm Chemical Reagent Co., Ltd, and used as the isocyanate-reactive group-containing compound having a number average molecular weight of 32-400 g/mol.

Na₂CO₃ solution (concentration: 10%): sodium carbonate is weighed and dissolved in water to obtain an aqueous sodium carbonate solution having a mass fraction of 10%. The sodium carbonate solid has a purity of ≥99.0%, and is commercially available from Sinopharm Chemical Reagent Co., Ltd. Water is produced with a MingChe-D24UV pure water machine from Millipore Corporation.

Niax silicone Y-10366: a surfactant, commercially available from Momentive Performance Materials Co. Ltd and used as additive.

Niax CS_22LF: Surfactant having a hydroxyl value of about 350 mg KOH/g and a viscosity (23°C) of 650 mPa·s, and being commercially available from Momentive Performance Materials Co. Ltd and used as additive.

Dabco T-9: stannous octoate, catalyst, commercially available from Evonik Specialty Chemicals Co., Ltd.

Dabco BL-11: a solution of 70% bis(dimethylaminoethyl)ether in dipropylene glycol, catalyst, commercially available from Evonik Specialty Chemicals Co., Ltd.

DBU: 1,8-diazabicyclo[5.4.0]undec-7-ene, purity≥98%, commercially available from WoKai reagent.

### Test Methods

Foam density: it is obtained by the measurement according to the standard ASTM D3574.

Falling ball rebound: it is obtained by the measurement according to the standard ASTM D3574.

Air flow rate: it is obtained by the measurement according to the standard ASTM D3574 with a F0023 digital-display foam porosity tester commercially available from the IDM company. Under the test conditions of 23°C and 1 standard atmospheric pressure and by keeping a foam having a length, width and height dimension of 50mm×50mm×25mm under a pressure difference of 125Pa, the volume of the air passing through the foam per unit time is measured to obtain the air flow rate in L/min.

UV stability: it is obtained by the measurement according to the standard GB/T 23983-2009 with a QUV/se ultraviolet light accelerated aging tester of the Q-Lab company. The test is carried out with a UVA-340 ultraviolet strip lamp with an irradiance of 0.68 W/m2, a blackboard temperature of (60±3)°C and a continuous light exposure for 24h. Compared with a standard gray card, the result is expressed as grades 1-5.

Test method for the phenolic yellowing resistance index of the non-water washed flexible foam: the test is carried out according to the standard ISO 105-X18: 2007 test standard, wherein a flexible polyurethane foam sample having a length×width×height of (100±2)mm×(30±2)mm×(15±2)mm and a piece of a standard fabric are respectively wrapped with a standard test paper containing a phenol compound, and then sandwiched between glass plates having a lengthxwidthxheight of (100±1)mm×(40±1)mm×(3±0.5)mm to form a combined sample. The combined sample is tightly wrapped with a polyethylene film that does not contain 2,6-di-tert-butyl para-hydroxytoluene (BHT) and fixed on a sweat stain-resistant color fastness tester. 5 kg pressure is applied and the tester is placed into an oven at 50°C. The tester is taken out after 16 hours, and cooled. The tester is opened. The polyethylene film is disassembled. The flexible polyurethane foam sample and the standard fabric are taken out and graded in 30 minutes. The flexible polyurethane foam samples are compared after and before the test, and the staining level of the flexible polyurethane foam sample, that is, its phenolic yellowing resistance index is assessed with the ISO 105 A03 staining gray card.

The test method for the phenolic yellowing resistance index of the flexible foam after washing and drying once according to the standard AATCC 135-2012: the flexible polyurethane foam samples are washed with reference to the washing method according to the standard AATCC 135-2012 by using the 3LWTW4840YW washer and the 3LWED4900YW dryer of Whirlpool. The following materials and conditions are used in the test: the AATCC 1993 standard washing powder, the AATCC standard No. 1 washing cloth, the ordinary water flow setting, the water temperature of 60±3°C, the washing time of 12 minutes, the spin-drying time of 6 minutes, the roller type ordinary drying, the drying temperature of 66±5°C, the cooling time of 10 minutes, and washing and drying each once. The sample is left to stand at room temperature until it becomes dry, and then the phenolic yellowing resistance index is tested using the test method for the phenolic yellowing resistance index of the flexible foam.

### Reference value for the flexible foam test

Table 1 shows the performance test indexes of the flexible foam and reference values thereof.

**Table 1: the performance test indexes of the foam and reference values thereof**

| Performance test indexes of the foam | Reference values |
|---|---|
| Cream time | < 50s, the shorter the time, the higher the reaction efficiency of the composition |
| Rise time | ≤500s, the shorter the time, the higher the reaction efficiency of the composition |
| Falling ball rebound | 35%, the larger the percentage value, the higher the rebound resilience of the foam |
| Air flow rate | ≥ 30L/min, the larger the air flow rate, the better the gas permeability of the foam |
| UV stability (ultraviolet yellowing resistance grade) | 1→5, grades 4 and 5 indicate no color change discernible to the naked eyes, indicating that the foam is less prone to yellowing. Grade 1 means that the foam becomes darker, and the foam tends to yellow. |
| Phenolic yellowing resistance index | 1→5, the higher the index, the better the yellowing resisting capability of the flexible foam. An index of 5 indicates that the foam cotton samples had little color change before and after the test. An index below 3 indicates that the foam cotton sample has a significant color change before and after the test, and cannot meet the industry requirements. |

Table 2 shows the components of the compositions of Examples 1-7 and Comparative Examples 1-8 and the performance test results of the flexible foams prepared from the compositions.

### Preparation of the flexible foam samples

According to the components shown in Table 2, each components were stored in room at 23°C for at least 24 hours. The components except the isocyanate and the catalyst were premixed for 40 seconds with a Pendraulic mixer having a rotation speed being set to 1500 rpm in a 1.5 liter stainless steel cup or plastic beaker. Then the catalyst was added to the cup, and the mixture was further stirred for 20 seconds with a Pendraulic mixer having a rotation speed being set to 1500 rpm. Then each isocyanate component was added to the cup, and the mixture was further stirred for 7 seconds with a Pendraulic mixer having a rotation speed being set to 3000 rpm. The resulting mixture was poured into a top-open 45 centimeters (length)×45 centimeters (width)×45 centimeters (height) paper-lined wooden box to foam. Until the foam height was not changed any more, the foam was removed from the wooden box after standing for 10 minutes and stored in a ventilated room at 23°C for at least 72 hours.

Foam samples with different sizes that meet the test requirements were cut from the foam by using an electric saw. The foam samples were hermetically placed in a room at 23°C and 50% humidity for at least 24 hours, and then the performances of the foam samples were tested.

It can be seen from Table 2 that the cream time and the rise time of the compositions of the examples of the present invention were short, and the reaction efficiencies were high. The flexible polyurethane foams prepared from the compositions of the examples of the present invention had a high falling ball rebound, that is to say, had a high rebound resilience; a large air flow rate, that is to say, the foam has a good gas permeability; and also has good abilities for resisting the ultraviolet yellowing and resisting the phenolic yellowing.

In comparison of Example 1 and Comparative Example 1, when the aqueous alkali metal salt solution contained in the composition of Comparative Example 1 had a pH value of 9.67, the cream time and the rise time of the composition of Comparative Example 1 were long, i.e., the reaction efficiency of the composition of Comparative Example 1 was poor, and the phenolic yellowing resistance index of the flexible polyurethane foam prepared from the composition of Comparative Example 1 without water washing and the phenolic yellowing resistance index after water-washing once were both 1,that is, the flexible polyurethane foam had a poor phenolic yellowing resistance.

In comparison of Example 3 and Comparative Example 2 and in comparison of Example 6 and Comparative Example 5, when the aqueous alkali metal salt solutions contained in the compositions of Comparative Examples 2 and 5 had a pH value of 11.75, the phenolic yellowing resistance indexes of the flexible polyurethane foams prepared from the compositions of Comparative Examples 2 and 5 without water washing and the phenolic yellowing resistance indexes after water-washing once were both 1, that is, the flexible polyurethane foams had a poor phenolic yellowing resistance.

In comparison of Example 3, Comparative Example 3 and Comparative Example 6, the compositions of the present invention can compromise the reaction efficiency and the phenolic yellowing resisting capability. Comparative Example 6 contained neither the aqueous alkali metal salt solution nor Dabco BL-11. The cream time and the rise time of the composition of Comparative Example 6 were long, that is, the reaction efficiency of the composition of Comparative Example 6 was poor. The composition of Comparative Example 3 did not contain the aqueous alkali metal salt solution, but Dabco BL-11 was added. The phenolic yellowing resistance index of the flexible polyurethane foam prepared from the composition of Comparative Example 3 without water washing and the phenolic yellowing resistance index after water-washing once were both 2, that is, the flexible polyurethane foams had a poor phenolic yellowing resistance.

In comparison of Example 1 and Comparative Example 4, the composition of Comparative Example 4 contained greater than 0.1wt% of DBU. The phenolic yellowing resistance index of the flexible polyurethane foam prepared from the composition of Comparative Example 4 without water washing and the phenolic yellowing resistance index after water-washing once were both 1, that is, the flexible polyurethane foam of Comparative Example 4 had a poor phenolic yellowing resistance.

In comparison of Example 6 and Comparative Example 7, when the aqueous alkali metal salt solution in the composition of Comparative Example 7 had a concentration of 1%, the cream time and the rise time of the composition of Comparative Example 7 were long, i.e., the reaction efficiency of the composition of Comparative Example 7 was poor, and the phenolic yellowing resistance index of the flexible polyurethane foam prepared from the composition of Comparative Example 7 without water washing and the phenolic yellowing resistance index after water-washing once were both 2.5, that is, the flexible polyurethane foam had a poor phenolic yellowing resistance.

In comparison of Example 5 and Comparative Example 8, when the aqueous alkali metal salt solution in the composition of Comparative Example 8 had a concentration of 30%, the phenolic yellowing resistance index of the flexible polyurethane foam prepared from the composition of Comparative Example 8 without water washing and the phenolic yellowing resistance index after water-washing once were both 1.5, that is, the flexible polyurethane foam had a poor phenolic yellowing resistance.

Those skilled in the art will readily understand that the present invention is not limited to the foregoing specific details, and the present invention can be implemented in other specific forms without departing from the spirit or main characteristics of the present invention. The examples are therefore to be considered as illustrative and not restrictive in any way, so that the scope of the present invention is indicated by the claims rather than by the foregoing description; and therefore, any changes should be regarded as belonging to the present invention as long as they are in the meaning and scope equivalent to those of the claims.

**Table 2: Components of the compositions of Examples 1-7 and Comparative Examples 1-8 and the performances of the flexible foams**

| Components of the composition/g | Examples | | | | | | | Comparative Examples | | | | | | | |
|---|---|---|---|---|---|---|---|---|---|---|---|---|---|---|---|
| | 1 | 2 | 3 | 4 | 5 | 6 | 7 | 1 | 2 | 3 | 4 | 5 | 6 | 7 | 8 |
| Arcol Polyol 3553 | | | | 200 | | | 200 | | | | | | | | |
| Arcol Polyol 1362 | 200 | 200 | 200 | | 200 | 200 | | 200 | 200 | 200 | 200 | 200 | 200 | 200 | 200 |
| Bayflex VP PU 19IF03 | 12 | 12 | 12 | 10 | 12 | 12 | 10 | 12 | 12 | 12 | 12 | 12 | 12 | 12 | 12 |
| Desmodur I | 140 | 117 | 100 | 15 0 | 109 | 108 | 118 | 140 | 100 | 100 | 140 | 108 | 100 | 108 | 109 |
| Desmodur XP2838 | | | | | | | 1 | | | | | | | | |
| Desomodur N3600 | 16 | 9 | 11 | 27 | 12 | 12 | 17 | 16 | 11 | 11 | 16 | 12 | 11 | 12 | 12 |
| Desomodur N3300 | | 4 | | | | | | | | | | | | | |
| TEOA | 10 | 10 | 5.74 | 10 | 10 | 5.74 | 10 | 10 | 5.74 | 5.74 | 10 | 5.74 | 5.74 | 5.74 | 10 |
| DEOA | 4 | 4 | 4 | 4 | 4 | 4 | 4 | 4 | 4 | 4 | 4 | 4 | 4 | 4 | 4 |
| KHCO₃ solution (concentration= 3%, pH value=8.77) | | 5. 66 | | | | | | | | | | | | | |
| KHCO₃ solution (concentration= 2%, pH value=8.46) | | | | | | 5. 6 | | | | | | | | | |
| NaHCO₃ solution (concentration= 1%, pH value=8.55) | | | | | | | | | | | | | | 5.55 | |
| NaHCO₃ solution (concentration= 8%, pH value=8.28) | | | 5.973 | | | | | | | | | | | | |
| NH₄HCO₃ solution (concentration= 7.65%, pH value= 7.86) | | | | 3 | | | | | | | | | | | |
| NaHCO₃ solution (concentration= 2.85%, pH value=8.66) | 5.651 | | | 5.651 | | | | | | | 5.651 | | | | |
| Sodium citrate solution (concentration= 23.56%, pH value=9.14) | | | | | 7.18 | | | | | | | | | | |
| 12.95% Na₂SO₄ solution (pH value=6.04) | | | | | | | 6.307 | | | | | | | | |
| Na₂CO₃ solution (concentration= 10%, pH value=11.75) | | | | | | | | | 6.1 | | | 6.1 | | | |
| Sodium benzoate solution (concentration= 3%, pH value=9.67) | | | | | | | | 5.66 | | | | | | | |
| 30% sodium citrate solution (pH value=9.32) | | | | | | | | | | | | | | | 7.84 |
| Water | 2.74 | | | | | | | 2.74 | | 5.49 | 2.74 | | 5.49 | | |
| Dabco BL-11 | | | | | | | | | | 8 | | | | | |
| DBU | | | | | | | | | | | 0.5 | | | | |
| Niax silicone Y-10366 | 12 | 12 | 12 | 6 | 12 | 12 | 6 | 12 | 12 | 12 | 12 | 12 | 12 | 12 | 12 |
| Niax CS_22LF | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Dabco T-9 | 4 | 4 | 4 | 4 | 4 | 4 | 4 | 4 | 4 | 4 | 4 | 4 | 4 | 4 | 4 |
| Isocyanate index | 100 | 100 | 100 | 108 | 100 | 108 | 108 | 100 | 100 | 100 | 100 | 108 | 100 | 108 | 100 |

| The performance test results of the flexible foams | | | | | | | | | | | | | | | |
|---|---|---|---|---|---|---|---|---|---|---|---|---|---|---|---|
| Visual appearance | ok | ok | ok | ok | ok | ok | ok | ok | ok | ok | ok | ok | ok | ok | ok |
| Cream time (s) | 28 | 25 | 30 | 30 | 25 | 38 | 44 | 50 | 24 | 32 | 17 | 22 | 70 | 70 | 26 |
| Rise time (s) | 209 | 245 | 225 | 260 | 232 | 367 | 310 | 570 | 160 | 293 | 111 | 151 | 764 | 570 | 226 |
| Foam density (kg/m³) | 34 | 47 | 46 | 32 | 52 | 45 | 92 | 40 | 46 | 48 | 37 | 46 | 47 | 50 | 52 |
| Falling ball rebound (%) | 47 | 50 | 56 | 44 | 56 | 49 | 44 | 38 | 59 | 51 | 46 | 59 | 42 | 49 | 56 |
| Air flow rate (L/min) | 46 | 77 | 53 | 69 | 67 | 42 | 95 | 30 | 56 | 67 | 76 | 59 | 52 | 31 | 71 |
| UV stability | 5 | 5 | 5 | 5 | 5 | 5 | 5 | 5 | 5 | 5 | 5 | 5 | 5 | 5 | 5 |
| Phenolic yellowing resistance index without water-washing | 3.5 | 3.5 | 3 | 3.5 | 3 | 3.5 | 4 | 1 | 1 | 2 | 1 | 1 | 4 | 2.5 | 1.5 |
| Phenolic yellowing resistance index after water-washing once | 3.5 | 3.5 | 3 | 3.5 | 3 | 3.5 | 4 | 1 | 1 | 2 | 1 | 1 | 4 | 2.5 | 1.5 |

## Claims

1. A composition, comprising the following components:
a. an isocyanate mixture, comprising an isocyanate monomer and an isocyanate trimer, the weight ratio of the isocyanate monomer to the isocyanate trimer is 3:1-200:1;
b. a polymer polyol mixture, comprising:
b1) a first polyether polyol having a number average molecular weight of not less than 3000 g/mol, said first polyether polyol being obtained by polymerization of components comprising ethylene oxide, said first polyether polyol has an ethylene oxide content of 5-20wt%, based on the amount of the components for preparing said first polyether polyol being 100wt%,
b2) a second polyether polyol having a number average molecular weight of not less than 3000 g/mol, said second polyether polyol being obtained by polymerization of components comprising ethylene oxide, said second polyether polyol has an ethylene oxide content of greater than 60wt%, based on the amount of the components for preparing said second polyether polyol being 100wt%, and
b3) optionally a third polyether polyol having a number average molecular weight of not less than 500 g/mol,
wherein, the weight ratio of the first polyether polyol to the second polyether polyol is 4:1-100:1, and the amount of the third polyether polyol is not more than 20wt%, based on the amount of the polymer polyol mixture being 100wt%;
c. an isocyanate-reactive group-containing compound having a number average molecular weight of 32-400 g/mol;
d. an aqueous alkali metal salt solution, having a concentration of greater than or equal to 1.5% and less than 30% and a pH value of less than 9.5; and
e. a metal catalyst;
wherein the amount of the tertiary amine catalyst in the composition is not more than 0.1wt%, and the isocyanate index of the composition is 70-120.

2. The composition according to claim 1, **characterized in that** the alkali metal salt in the aqueous alkali metal salt solution is obtained by the reaction of a Bronsted acid and an alkali metal, and most preferably one or more of the following: sodium bicarbonate, potassium bicarbonate, ammonium bicarbonate, sodium sulfate, potassium sulfate, potassium citrate, sodium benzoate, sodium sulfite, potassium sulfite, potassium hydrogen sulfate and sodium hydrogen sulfate.

3. The composition according to claim 1 or 2, **characterized in that** the aqueous alkali metal salt solution has a concentration of 2%-25%.

4. The composition according to any of claims 1-3, **characterized in that** the aqueous alkali metal salt solution has a pH value of 6-9.2.

5. The composition according to any of claims 1-4, **characterized in that** the isocyanate mixture has an isocyanate group content of 20-54wt%, most preferably 20-37.5wt%, based on the amount of the isocyanate mixture being 100wt%.

6. The composition according to any of claims 1-5, **characterized in that** the isocyanate monomer and the isocyanate trimer are each independently aliphatic and/or alicyclic.

7. The composition according to any of claims 1-6, **characterized in that** the weight ratio of the isocyanate monomer to the isocyanate trimer is 3:1-120:1, most preferably 3:1-20:1.

8. The composition according to any of claims 1-7, **characterized in that** said isocyanate monomer is one or more of the following: isophorone diisocyanate and dicyclohexylmethane diisocyanate, most preferably isophorone diisocyanate.

9. The composition according to any of claims 1-8, **characterized in that** the isocyanate trimer has a viscosity of 1000-10000mPa·s at 23°C.

10. The composition according to any of claims 1-9, **characterized in that** the isocyanate trimer is one or more of the following: isophorone diisocyanate trimer, 1,5-cyclopentane diisocyanate trimer and hexamethylene diisocyanate trimer.

11. The composition according to any of claims 1-10, **characterized in that** the amount of the isocyanate mixture and the polymer polyol mixture is greater than 50wt% and less than or equal to 98wt%, most preferably greater than 85wt% and less than or equal to 98wt%, based on the amount of the composition being 100wt%.

12. The composition according to any of claims 1-11, **characterized in that** the weight ratio of the first polyether polyol to the second polyether polyol is 4:1-30:1.

13. The composition according to any of claims 1-12, **characterized in that** said first polyether polyol has an ethylene oxide content of 10-20wt%, based on the amount of the components for preparing said first polyether polyol being 100wt%.

14. The composition according to any of claims 1-13, **characterized in that** said second polyether polyol has an ethylene oxide content of greater than 65wt%, based on the amount of the components for preparing said second polyether polyol being 100wt%.

15. The composition according to any of claims 1-14, **characterized in that** the amount of the tertiary amine catalyst is not greater than 0.01wt%, based on the amount of the composition being 100wt%.

16. The composition according to any of claims 1-15, **characterized in that** the composition further comprises an additive, and the additive is one or more of the following substances: water, physical foaming agents, surfactants, pigments, antioxidants, UV light absorbents, UV light stabilizers, flame retardants, fillers, recycled foam powders, antimicrobial compounds and antistatic agents.

17. A flexible foam obtained by reacting the composition according to any of claims 1-16.

18. The flexible foam according to claim 17, **characterized in that** the flexible foam has a density of 20kg/m³-120kg/m³, most preferably 20kg/m³-100kg/m³.

19. The flexible foam according to claim 17 or 18, **characterized in that** said flexible foam has a phenolic yellowing resistance index of not less than 3, which is obtained by the test in accordance with the standard ISO 105-X18:2007.

20. The flexible foam according to any of claims 17-19, **characterized in that** the flexible foam has an air flow rate of not less than 30L/min, a falling ball rebound of greater than 35%, and a UV stability of not less than 4.

21. Use of the composition according to any of claims 1-16 for preparing the flexible foam.

22. A process for preparing a flexible foam, comprising mixing the components of the composition according to any of claims 1-16 and foaming to obtain the flexible foam.

23. The process according to claim 22, **characterized in that** the process has a cream time of less than 50 seconds and a rise time of not greater than 500 seconds.

24. A textile comprising the flexible foam according to any of claims 17-20.

25. The textile according to claim 24, **characterized in that** the textile is selected from the group consisting of pillows, cushions, garment pads, underwear and upper vamps.
